# EUROPÄISCHE PATENTANMELDUNG

(11) **EP 1 495 894 A1**
(43) Veröffentlichungstag der Anmeldung: **12.01.2005**
(21) Anmeldenummer: 04016157.2
(22) Anmeldetag: 09.07.2004
(51) Int. Cl.: B60J 7/22

(54) **Windabweiser für ein Fahrzeugdach**

(30) Priorität: 11.07.2003 DE 10331708
(71) Anmelder: Webasto AG, 82131 Stockdorf (DE)
(72) Erfinder: Schönberger, Michael, 81377 München (DE)
(74) Vertreter: Bedenbecker, Markus

(57) **Zusammenfassung**

Bei einem Fahrzeugdach mit einer Dachöffnung (12), einem Deckel (14), der in Fahrzeuglängsrichtung verlagerbar ist, um die Dachöffnung wahlweise zu verschließen oder mindestens teilweise freizulegen, und einem Windabweiser (20), der an seitlich mit Bezug zur Dachöffnung angeordneten Lagerstellen (28) derart angelenkt ist, dass er in der Schließstellung des Deckels zwischen dem Deckel und der Vorderkante der Dachöffnung liegt und seine Oberkante im wesentlichen bündig zur Dachfläche (10) ist, und der beim Öffnen des Deckels um eine durch die Lagerstellen verlaufende Achse derart verschwenkt wird, dass seine Oberkante über der festen Dachfläche liegt, weist die der Vorderkante der Dachöffnung (12) zugewandte Seite (22) des Windabweisers (20) in jeder beliebigen zu der Windabweiserschwenkachse lotrechten Ebene eine Krümmung auf, deren Krümmungsradius im wesentlichen dem in dieser Ebene gemessenen Abstand der Vorderkante der Dachöffnung zu der Windabweiserschwenkachse entspricht.

## Beschreibung

Die vorliegende Erfindung betrifft ein Fahrzeugdach mit einer Dachöffnung, einem Deckel, der in Fahrzeuglängsrichtung verlagerbar ist, um die Dachöffnung wahlweise zu verschließen oder mindestens teilweise freizulegen, und einem Windabweiser, der an seitlich mit Bezug zur Dachöffnung angeordneten Lagerstellen derart angelenkt ist, dass er in der Schließstellung des Deckels zwischen dem Deckel und der Vorderkante der Dachöffnung liegt und seine Oberkante im wesentlichen bündig zur Dachfläche ist, und der beim Öffnen des Deckels um eine durch die Lagerstellen verlaufende Achse derart verschwenkt wird, dass seine Oberkante über der festen Dachfläche liegt.

Während bei den meisten heutigen Fahrzeugdächern mit durch einen verschiebbaren Deckel verschließbarer Dachöffnung und einem im Bereich der Vorderkante der Dachöffnung angeordneten Windabweiser der Windabweiser so angeordnet ist, dass er bei geschlossenem Deckel unterhalb der Deckelvorderkante abgelegt wird, ist in der am 26. Juni 1954 angemeldeten DE-AS 1 001 129 ein Dach der eingangs genannten Art beschrieben, bei welcher ein L-förmiger Windabweiser in der Ruhestellung hochkant im vorderen Dachrahmen zwischen dem Deckel und der Vorderkante der Dachöffnung liegt. Gemäß einer bevorzugten Ausführungsform trägt der Windabweiser ein- oder beidseitig Gummiabdichtungen, sodass der normalerweise zwischen der Dachhautkante und der Vorderkante des Schiebedeckels bestehende Abstand in der Schließstellung des Deckels dicht schließend überbrückt wird. Nachteilig bei der aus DE-AS 1 001 129 bekannten Windabweiseranordnung ist, dass für eine Abdichtung zwischen Windabweiser und Vorderkante der Dachöffnung nur in den beiden Endlagen des Windabweisers gesorgt ist, d.h. entweder in der vollständig ausgeklappten Position oder in der vollständig eingefahrenen Position. Nachteilig ist außerdem, dass sich in der Deckelschließstellung zwischen dem Windabweiser und der Vorderkante der Dachöffnung nur eine recht geringe Anpresskraft auf die an dem Windabweiser befestigte Dichtung bewerkstelligen lässt, und somit nicht sichergestellt werden kann, dass der Randspalt zwischen dem Windabweiser und der Vorderkante der Dachöffnung wirklich vollständig geschlossen ist.

Ein weiterer Entwurf eines Fahrzeugdaches mit einem in der Schließstellung des Deckels zwischen dem Deckel und der Vorderkante der Dachöffnung angeordneten Windabweiser findet sich in der am 14. Juli 1960 angemeldeten DE-AS 1 189 393 sowie in der am 27. Juni 1961 hierzu angemeldeten Zusatzanmeldung DE-AS 1 250 749. Bei diesem Fahrzeugdach wird der Windabweiser von einer der Querwölbung des Daches angepassten Leiste gebildet, an der ein Streifen aus weichem, elastischem Material befestigt ist. In der Schließstellung des Deckels wird der Windabweiser soweit abgesenkt, dass dessen Oberkante unterhalb einer am vorderen Dachrahmen befestigten, mit der festen Dachfläche bündigen Dichtung liegt. Wird der Deckel geschlossen, so legt sich die Vorderkante des Deckels gegen den Windabweiser an und verformt diesen soweit nach vorne, bis die Vorderkante des Deckels zur Anlage gegen die an der Vorderkante der Dachöffnung angeordnete Dichtung kommt. Während bei dem aus DE-AS 1 189 393 und DE-AS 1 250 749 bekannten Fahrzeugdach ebenfalls kein Abdichten zwischen der Vorderkante der Dachöffnung und dem Windabweiser in Zwischenstellungen des Windabweisers gesorgt ist, konnten sich darüber hinaus flexible Windabweiser aufgrund der gegenüber starren Windabweisern schlechteren Windleiteigenschaften nicht durchsetzen.

Es ist Aufgabe der vorliegenden Erfindung ein Fahrzeugdach der eingangs genannten Art zu schaffen, bei welchem in allen Windabweiserlagen für eine adäquate Abdichtung zwischen der Vorderkante der Dachöffnung und dem Windabweiser gesorgt ist.

Erfindungsgemäß wird diese Aufgabe bei einem Fahrzeugdach der eingangs genannten Art dadurch gelöst, dass die der Vorderkante der Dachöffnung zugewandte Seite des Windabweisers in jeder beliebigen zu der Windabweiserschwenkachse lotrechten Ebene eine Krümmung aufweist, deren Krümmungsradius im wesentlichen dem in dieser Ebene gemessenen Abstand der Vorderkante der Dachöffnung zu der Windabweiserschwenkachse entspricht. Anders als bei Fahrzeugdächern mit geradlinig geschnittener Windleitfläche bildet sich bei dem Windabweiser nach der Erfindung kein Spalt beim Aus- oder Einfahren des Windabweisers. Auf diese Weise lassen sich störende Windgeräusche beim Ausfahren des Windabweisers auf ein Minimum reduzieren. Darüber hinaus wird durch die permanente Abdichtung zwischen der Vorderkante der Dachöffnung und dem Windabweiser vermieden, dass sich beim Einfahren des Windabweisers entlang dem zwischen dem ausgefahrenen Windabweiser und der festen Dachfläche gebildeten Winkel angesammeltes Wasser oder Schmutzstoffe in den vorderen Dachraum gelangen können. Des Weiteren kann durch entsprechende Ansteuerung des Deckels und des Windabweisers der Dachöffnungsvorgang so gestaltet werden, dass der Windabweiser bei geschlossenem Deckel vollständig ausgefahren wird, ohne dass durch den Öffnungsvorgang ein Luftspalt entsteht, d.h. weder zwischen der Vorderkante der Dachöffnung und dem Windabweiser noch zwischen dem Windabweiser und dem Deckel.

Bevorzugte Ausgestaltungen der Erfindung ergeben sich aus den Unteransprüchen.

Obschon grundsätzlich auch der Windabweiser eine Dichtung tragen könnte, um für eine Abdichtung zwischen dem Windabweiser und der Vorderkante der Dachöffnung und/oder dem Windabweiser und der Vorderkante des Deckels zu sorgen, ergibt sich konstruktiv ein einfacherer Aufbau, wenn die Vorderkante der Dachöffnung von einer Dichtung gebildet wird. Vorzugsweise ist zudem entlang der Vorderkante des Deckels eine Dichtung vorgesehen, die in der Schließstellung des Deckels gegen den Windabweiser anliegt. Hierbei ist die vordere Endstellung des Deckels vorzugsweise so gewählt, dass der Deckel für einen entsprechenden Anpressdruck der Dichtung gegen den Windabweiser sorgt.

Zum Ausstellen den Windabweisers ist der Windabweiser vorzugsweise über gefederte Schwenkarme an die Lagerstellen angelenkt. Hierbei können die Schwenkarme aus einem federnden Werkstoff gefertigt sein oder können die Schwenkarme jeweils einen im wesentlichen starren Schwenkhebel sowie eine Feder aufweisen, die den Schwenkhebel in Ausstellrichtung des Windabweisers vorspannt. Im letzt genannten Fall können der Windabweiser und die Schwenkhebel auch einstückig ausgebildet sein und beispielsweise von einem Kunststoffformteil gebildet sein. Im einfachsten Fall wird der Windabweiser gegen die Kraft der Feder in seine Ablageposition gebracht, wenn der Deckel nach vorne verfahren wird und mit den Schwenkarmen in Eingriff tritt. Durch geeignete Wahl des Eingriffs zwischen dem Deckel und den Schwenkarmen, der beispielsweise auch über eine Kulissenbahn erfolgen kann, lässt sich das Öffnungsverhalten des Windabweisers wie gewünscht festlegen. Anstelle eines kontinuierlichen Anhebe- und Absenkvorgangs kann das Ausstellen des Windabweisers auch stufenweise erfolgen, insbesondere um den Windabweiser über die feste Dachfläche auszustellen, bevor sich der Deckel mit seiner Dichtung vom Windabweiser löst und somit die Dachöffnung freigibt. Durch die gefederte Anlenkung des Windabweisers stell dieser sich selbsttätig aus, sobald er durch Verfahren des Deckels bzw. durch eine separate Ansteuerung freigegeben wird.

In weiterer Ausgestaltung der Erfindung ist der Windabweiser in der Bewegungsrichtung des Deckels geringfügig verschiebbar ausgebildet. Auf diese Weise lassen sich unterschiedliche Anpressdrücke auf die Dichtungen zwischen der Vorderkante der Dachöffnung und dem Windabweiser und der Vorderkante des Deckels und dem Windabweiser in der Schließstellung und beim Öffnen des Deckels bewerkstelligen. Die Anordnung ist hierbei vorzugsweise so getroffen, dass zum Öffnen des Daches der Deckel geringfügig nach hinten verfahren wird, sodass sich die zwischen der Vorderkante der Dachöffnung und dem Windabweiser und der Vorderkante des Deckels und dem Windabweiser angeordneten Dichtungen entspannen können, jedoch nicht soweit, dass sich diese Dichtungen von der jeweiligen Gegenfläche lösen. Bei einer derartigen Ausgestaltung des Fahrzeugdaches lassen sich in der Schließstellung hohe Anpressdrücke und damit gute Dichtwirkungen erzielen, behindern jedoch beim Öffnungsvorgang die Dichtungen nicht das Ausstellen des Windabweisers und sorgen dennoch für eine ausreichende Dichtwirkung, um die Bildung von Randspalten zu vermeiden, die andernfalls zu störenden Geräuschen beim Öffnen des Deckels führen könnten.

Eine Verschiebbarkeit des Windabweisers in der Bewegungsrichtung des Deckels lässt sich insbesondere dadurch bewerkstelligen, dass die Lagerstellen in der Bewegungsrichtung des Deckels geringfügig verschiebbar ausgebildet sind, oder aber dass die Lagerstellen mit Bezug auf die feste Dachfläche ortsfest fixiert sind und die an die Lagerstellen angelenkten Lagerungen des Windabweisers in der Bewegungsrichtung des Deckels geringfügig verschiebbar mit Bezug auf die Lagerstellen ausgebildet sind. Ein besonders einfacher Aufbau ergibt sich, wenn der Windabweiser über in der Bewegungsrichtung des Deckels ausgerichtete Langlöcher an die Lagerstellen angelenkt ist.

Ist bei einem Fahrzeugdach mit einem in der Bewegungsrichtung des Deckels geringfügig verschiebbaren Windabweiser entlang der Vorderkante der Dachöffnung eine Dichtung vorgesehen, gegen die sich der Windabweiser beim Schließen des Deckels unter Formung der Dichtung anlegt, so ist der Verschiebeweg an den Lagerstellen vorzugsweise so gewählt, dass er im wesentlichen den Betrag der Verformung der Dichtung beim Schließen des Deckels entspricht. In diesem Falle sind zum Verschieben des Windabweisers in der Bewegungsrichtung des Deckels keine zusätzlichen Bauteile nötig, sondern wird diese Verschiebung beim Öffnen des Deckels durch das Entspannen der Dichtung ausgelöst.

Ein bevorzugtes Ausführungsbeispiel der Erfindung wird im folgenden unter Bezugnahme auf die beiliegenden Zeichnungen im Detail beschrieben. Es zeigen:
- FIG. 1: einen Schnitt durch ein Fahrzeugdach im Bereich der Vorderkante der Dachöffnung;
- FIG. 2: das Fahrzeugdach gemäß FIG. 1, bei welchem der Windabweiser bei geschlossenem Deckel teilweise ausgefahren ist;
- FIG. 3: das Fahrzeugdach gemäß FIG. 1 mit vollständig ausgestelltem Windabweiser
- FIG. 4: eine perspektivische Seitenansicht eines Windabweiser nach der vorliegenden Erfindung;
- FIG. 5: eine Ansicht des Windabweisers aus FIG. 2 im Bereich der Lagerstelle;

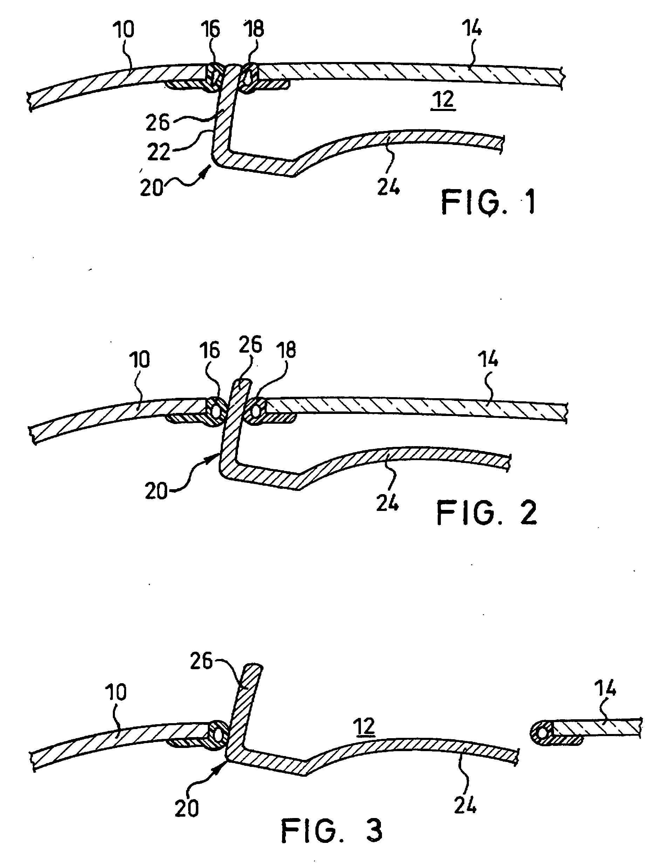

FIG. 1 zeigt einen Schnitt durch ein Fahrzeugdach im Bereich der Vorderkante einer in einer festen Dachfläche 10 vorgesehen Dachöffnung 12. Bei der in FIG. 1 gezeigten festen Dachfläche 10 kann es sich um die feste Dachhaut eines Fahrzeugdaches, um ein Glasfestelement oder auch um einen beweglichen Deckel eines Mehrdeckeldaches handeln. Zum Verschließen der Dachöffnung 12 dient ein Deckel 14, bei welchem es sich insbesondere um den beweglichen Deckel eines Schiebedaches, eine Schiebehebedaches, eines außengeführten Schiebedaches, eines Lamellendaches oder eines Mehrdeckeldaches handeln kann. Zur Vereinfachung der Darstellung zeigt FIG. 1 ein Ausführungsbeispiel, bei welchem die feste Dachfläche 10 von einem vorderen Glasfestelements eines außengeführten Schiebedaches gebildet ist, während der Deckel 14 ein verschiebbarer Glasdeckel ist. Entlang dem die Dachöffnung 12 begrenzenden Rand der festen Dachfläche 10 ist eine Dichtung 16 vorgesehen und entlang der Vorderkante des Deckels 14 ist eine weitere Dichtung 18 vorgesehen. In der in FIG. 1 gezeigten geschlossenen Stellung des Daches ist ein Windabweiser 20 soweit abgesenkt, dass die Oberkante seines in Fahrzeugquerrichtung ausgerichteten Windleitelements 26 bündig zur Dachfläche liegt. Bei der in den Zeichnungen veranschaulichten Ausführungsform wird das Windleitelement 26 durch die Verschiebebewegung des Deckels 14 in der in FIG. 1 gezeigten Deckelschließstellung so zwischen der festen Dachfläche 10 und dem Deckel 14 verklemmt, dass sich die Dichtungen 16 und 18 satt gegen das Windleitelement 26 anlegen.

Bei der in FIG. 2 gezeigten Zwischenstellung wurde der Deckel 14 geringfügig nach hinten verfahren (d.h. in der Zeichnung nach rechts), sodass die Dichtungen 16 und 18 nach wie vor gegen das Windleitelement 26 anliegen, anders als bei der in FIG. 1 gezeigten Schließstellung jedoch locker, sodass eine Auf- oder Abwärtsbewegung des Windabweisers 20 möglich ist. In der in FIG. 3 gezeigten Öffnungsstellung ist der Deckel 14 noch weiter nach hinten verfahren und ist der Windabweiser 20 vollständig nach oben ausgestellt. Wie in den FIGN. 1, 2 und 3 veranschaulicht ist, ist die der Vorderkante der Dachöffnung zugewandte Seite des Windleitelements 26 so geformt, dass sie unabhängig von der Stellung des Windabweisers immer gegen die vordere Dichtung 16 anliegt. Dies wird erfindungsgemäß dadurch bewerkstelligt, dass die der Dachöffnung 22 zugewandte Seite des Windabweisers 20, d.h. des Windleitelements 26, eine Krümmung aufweist, deren Krümmungsradius im wesentlichen dem Abstand der Vorderkante der Dachöffnung zu der Windabweiserschwenkachse entspricht. Um zu gewährleisten, dass der Windabweiser 20 über seine gesamte in Fahrzeugquerrichtung gemessene Bereite auch dann gegen die Dichtung 16 an der Vorderkante der Dachöffnung anliegt, wenn die Dachöffnung 12 und entsprechend der Windabweiser 20 in Fahrzeugquerrichtung eine gekrümmte Form aufweisen, wobei der Abstand der Vorderkante der Dachöffnung zu der Windabweiserschwenkachse im mittleren Bereich des Windabweisers am größten ist und zu den Seiten des Windabweisers hin abnimmt, weist die der Vorderkante der Dachöffnung zugewandte Seite 22 des Windabweisers 20 in jeder beliebigen, zu der Windabweiserschwenkachse lotrechten Ebene eine Krümmung auf, deren Krümmungsradius im wesentlichen dem in dieser Ebene gemessenen Abstand der Vorderkante der Dachöffnung zu der Windabweiserschwenkachse entspricht.

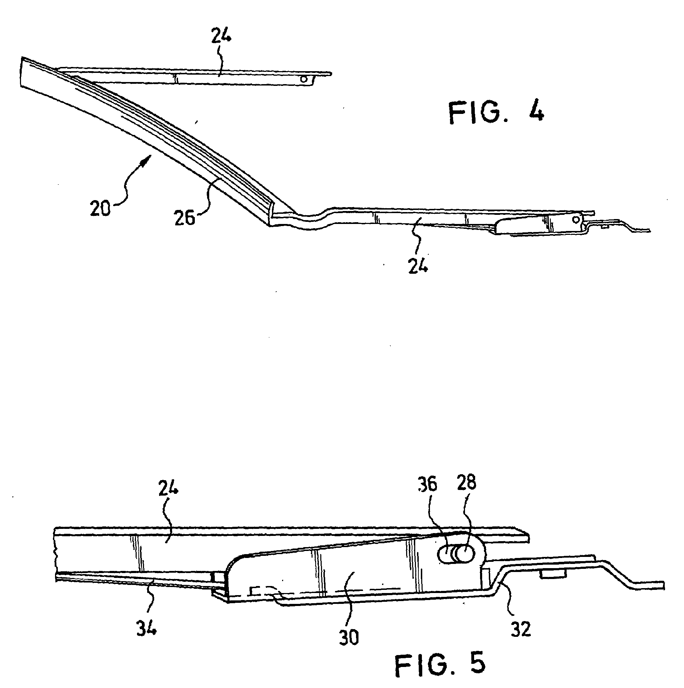

FIG. 4 zeigt eine perspektivische Ansicht des Windabweisers 20 sowie der zum Lagern und Ausstellen des Windabweisers benutzen Elemente, wobei der Übersichtlichkeit halber die übrigen Dachelemente wie beispielsweise die feste Dachfläche, der bewegliche Deckel sowie der Dachrahmen als solche nicht dargestellt sind. Während die zum Lagern und Ausstellen des Windabweisers benutzen Bauteile nur an einem der Schwenkarme des Windabweisers dargestellt sind, versteht sich, dass entsprechende Bauteile auch am anderen Schwenkarm vorgesehen sind. Bei der in FIG. 4 gezeigten Ausführungsform ist das in Fahrzeugquerrichtung ausgerichtete Windleitelement 26 einstückig mit den zum Ausstellen des Windabweisers vorgesehenen Schwenkarmen 24 ausgebildet. Die Schwenkarme 24 sind nahe ihren hinteren Enden dachfest gelagert, beispielsweise mittels Lagerzapfen 28, die im Dachrahmen zu beiden Seiten der Dachöffnung angeordnet sind. Wie aus FIG. 4 hervorgeht, lassen sich mit dem vorliegend vorgeschlagenen Konzept problemlos Windabweiser für Dächer realisieren, bei welchen die Dachfläche in Fahrzeugquerrichtung stark gekrümmt ist.

FIG. 5 zeigt das hintere Ende eines der Windabweiserschwenkarme 24, welches über einen Lagerzapfen 28 an einen Lagerbock 30 angelenkt ist, der im seitlichen Dachrahmen 32 fixiert ist. Zum Ausstellen des Windabweisers 20 ist eine Feder 34 vorgesehen, die den Windabweiser nach oben vorspannt. Die Betätigung des Windabweisers erfolgt hierbei über den Deckel 14, der im Verlauf seiner Schließbewegung direkt oder mittels einer Kulisse mit den Schwenkarmen 24 in Kontakt tritt und diese bei fortgesetzter Schließbewegung nach unten drückt. Wird der Deckel nach hinten verfahren, so drücken die Federn 34 den Windabweiser 20 nach oben. Die Ansteuerung des Windabweisers 20 kann auch so ausgelegt sein, dass wie in FIG. 2 gezeigt der Windabweiser zuerst ausgestellt wird und erst dann der Deckel 14 weiter nach hinten verfahren wird um die Dachöffnung 12 freizugeben.

Bei der in FIG. 5 gezeigten bevorzugten Ausführungsform weisen die dachfesten Lagerböcke 30 Langlöcher 36 auf, in welchen die Lagerzapfen 28 geführt sind, an welchen die Schwenkarme 24 angelenkt sind. Auf diese Weise kann der Windabweiser nachdem er nach unten verschwenkt d.h., eingefahren wurde, geringfügig nach vorne verschoben werden, sodass die der Vorderkante der Dachöffnung zugewandte Seite 22 des Windleitelements 26 gegen die Dichtung 16 angepresst wird. Das Anpressen des Windleitelements 26 gegen die Dichtung 16 kann hierbei durch eine entsprechende Ansteuerung des Deckels 14 erfolgen, bei welcher der Deckel 14 über die in FIG. 5 gezeigte Stellung, in welcher die Dichtungen 16 und 18 mit geringem Anpressdruck gegen das Windleitelement 26 anliegen, hinaus nach vorne verfahren wird. Insbesondere bei einem Schiebehebedach oder einem außen geführten Dach, bei welchen der Deckel zu Beginn der Öffnungsbewegung mit seiner Hinterkante angehoben und erst dann nach hinten verfahren wird, können die Verstellwege so gestaltet sein, dass die geringfügige Bewegung der Deckelvorderkante nach hinten, die auftritt, wenn dessen Hinterkante angehoben wird, ausreicht, um die Dichtungen 16 und 18, die beim vollständigen Schließen des Deckels 14 gegen den Windabweiser 20 verpresst wurden, zu entspannen.

Wie oben erläutert wurde, wird mit dem hier vorgeschlagenen Windabweiserkonzept gewährleistet, dass unabhängig von der Lage des Windabweisers kein Spalt zwischen der der Vorderkante der Dachöffnungen zugewandten Seite 22 des Windabweisers und der Vorderkante der Dachöffnung entsteht. Darüber hinaus ist es möglich, Dächer zu realisieren, bei welchen der Windabweiser über die feste Dachfläche ausgestellt wird, bevor sich der Deckel öffnet, sodass die beim Öffnen des Deckels entstehenden Geräusche minimiert werden. Hierbei kann die Oberkante des Windabweisers über die Dachfläche ausgestellt werden, sobald der Deckel nur ein kleines Stück nach hinten verfahren wurde. Insbesondere bei Dächern mit starker Dachwölbung in Fahrzeugquerrichtung wird durch das erfindungsgemäß Konzept, bei welchem der Windabweiser in der Schließstellung zwischen dem Deckel und der vorderen Dachfläche liegt, im Vergleich zu herkömmlichen Dächern, bei welchen der Windabweiser hochkant unter der Vorderkante des Deckels abgelegt wird, die Dicke des Deckels an Bauraum dazu gewonnen. Auf diese Weise können entweder höhere Windabweiser verwendet werden, sodass sich insgesamt geringere Windgeräusche ergeben, oder kann die Dicke des Deckels an Kopfraum hinzu gewonnen werden.

### Bezugszeichenliste

- 10: feste Dachfläche
- 12: Dachöffnung
- 14: Deckel
- 16: Dichtung
- 18: Dichtung
- 20: Windabweiser
- 22: der Vorderkante der Dachöffnung zugewandte Seite des Windabweisers
- 24: Schwenkarme
- 26: Windleitelement
- 28: Lagerzapfen
- 30: Lagerbock
- 32: seitlicher Dachrahmen
- 34: Feder
- 36: Langloch

## Patentansprüche

1. Fahrzeugdach mit einer Dachöffnung (12), einem Deckel (14), der in Fahrzeuglängsrichtung verlagerbar ist, um die Dachöffnung wahlweise zu verschließen oder mindestens teilweise freizulegen, und einem Windabweiser (20), der an seitlich mit Bezug zur Dachöffnung angeordneten Lagerstellen (28) derart angelenkt ist, dass er in der Schließstellung des Deckels zwischen dem Deckel und der Vorderkante der Dachöffnung liegt und seine Oberkante im wesentlichen bündig zur Dachfläche (10) ist, und der beim Öffnen des Deckels um eine durch die Lagerstellen verlaufende Achse derart verschwenkt wird, dass seine Oberkante über der festen Dachfläche liegt, **dadurch gekennzeichnet, dass** die der Vorderkante der Dachöffnung (12) zugewandte Seite (22) des Windabweisers (20) in jeder beliebigen zu der Windabweiserschwenkachse lotrechten Ebene eine Krümmung aufweist, deren Krümmungsradius im wesentlichen dem in dieser Ebene gemessenen Abstand der Vorderkante der Dachöffnung zu der Windabweiserschwenkachse entspricht.

2. Fahrzeugdach nach Anspruch 1, **dadurch gekennzeichnet, dass** die Vorderkante der Dachöffnung (12) von einer Dichtung (16) gebildet wird.

3. Fahrzeugdach nach Anspruch 1 oder 2, **dadurch gekennzeichnet, dass** entlang der Vorderkante des Deckels (14) eine Dichtung (18) vorgesehen ist, die in der Schließstellung des Deckels gegen den Windabweiser (20) anliegt.

4. Fahrzeugdach nach einem der vorhergehenden Ansprüche, **dadurch gekennzeichnet, dass** der Windabweiser (20) über gefederte Schwenkarme (24) an die Lagerstellen (28) angelenkt ist.

5. Fahrzeugdach nach Anspruch 4, **dadurch gekennzeichnet, dass** die Schwenkarme (24) aus einem federnden Werkstoff gefertigt sind.

6. Fahrzeugdach nach Anspruch 4, **dadurch gekennzeichnet, dass** die Schwenkarme (24) jeweils einen im wesentlichen starren Schwenkhebel sowie eine Feder (34) aufweisen, die den Schwenkhebel in Ausstellrichtung des Windabweisers (20) vorspannt.

7. Fahrzeugdach nach Anspruch 6, **dadurch gekennzeichnet, dass** der Windabweiser (26) und die Schwenkhebel (24) einstückig ausgebildet sind.

8. Fahrzeugdach nach einem der vorhergehenden Ansprüche, **dadurch gekennzeichnet, dass** der Windabweiser (20) in der Bewegungsrichtung des Deckels (14) geringfügig verschiebbar ausgebildet ist.

9. Fahrzeugdach nach Anspruch 8, **dadurch gekennzeichnet, dass** die Lagerstellen (28) in der Bewegungsrichtung des Deckels (14) geringfügig verschiebbar sind.

10. Fahrzeugdach nach Anspruch 8, **dadurch gekennzeichnet, dass** die Lagerstellen (28) mit Bezug auf die feste Dachfläche (10) ortsfest fixiert und die an die Lagerstellen angelenkten Lagerungen des Windabweisers (20) in der Bewegungsrichtung des Deckels (14) geringfügig verschiebbar mit Bezug auf die Lagerstellen ausgebildet sind.

11. Fahrzeugdach nach Anspruch 10, **dadurch gekennzeichnet, dass** der Windabweiser (20) über in der Bewegungsrichtung des Deckels (14) ausgerichtete Langlöcher (26) an die Lagerstellen (28) angelenkt ist.

12. Fahrzeugdach nach einem der Ansprüche 8 bis 11, **dadurch gekennzeichnet, dass** entlang der Vorderkante der Dachöffnung (12) eine Dichtung (16) vorgesehen ist, gegen die sich der Windabweiser (20) beim Schließen des Deckels (14) unter Verformung der Dichtung anlegt.

13. Fahrzeugdach nach Anspruch 12, **dadurch gekennzeichnet, dass** der Verschiebeweg an den Lagerstellen (28) im wesentlichen dem Betrag der Verformung der Dichtung (16) beim Schließen des Deckels (14) entspricht.
